# EUROPÄISCHE PATENTANMELDUNG

(11) **EP 4 220 531 A1**
(43) Veröffentlichungstag der Anmeldung: **02.08.2023**
(21) Anmeldenummer: 22207259.7
(22) Anmeldetag: 14.11.2022
(51) Int. Cl.: G06Q 50/02, H04W 4/029, G07C 5/00

(54) **VERFAHREN ZUM BETREIBEN EINES ANBAUGERÄTS UND VERWALTUNGSSYSTEM DAFÜR**

(30) Priorität: 27.01.2022 DE 102022101879
(71) Anmelder: CLAAS Tractor S.A.S., 78141 Vélizy-Villacoublay Cedex (FR)
(72) Erfinder: Johannsmann, Christoph, 33442 Herzebrock-Clarholz (DE)
(74) Vertreter: CLAAS Gruppe

(57) **Zusammenfassung**

Ein Verfahren zum Betreiben eines Gerätes mit den Schritten
a) Befördern des Geräts (2) mit einer ersten landwirtschaftlichen Maschine (1),
b) Abkoppeln des Geräts (2) von der ersten landwirtschaftlichen Maschine (1) an einer Abstellposition (4),
c) Übertragen von geographischen Koordinaten der Abstellposition (4) an ein Verwaltungssystem (3);
d) Weitergeben der geographischen Koordinaten durch das Verwaltungssystem (3) an eine zweite landwirtschaftliche Maschine,
dadurch gekennzeichnet, dass der Schritt c) ferner das Übertragen einer geographischen Ausrichtung des Geräts (2) an der Abstellposition (4) an das Verwaltungssystem (3) und der Schritt d) das Weitergeben der Ausrichtung oder einer von der Ausrichtung abgeleiteten Information an die zweite landwirtschaftliche Maschine umfasst.

## Beschreibung

Die vorliegende Erfindung betrifft ein Verfahren zum Betreiben eines an einer landwirtschaftlichen Maschine nutzbaren Geräts.

Aus DE 10 2017 201 040 A1 und DE 10 2011 120 884 B1 ist ein Verfahren bekannt, bei dem eine Arbeitsmaschine beim Ablegen eines Anbaugeräts den Ablageort aufzeichnet, um ein späteres Wiederauffinden durch dieselbe oder eine andere Arbeitsmaschine zu erleichtern.

In EP 2 452 549 B1 wird ein entgegengesetzter Ansatz verfolgt: hier zeichnet eine landwirtschaftliche Arbeitsmaschine beim Aufnehmen eines Arbeitsgeräts die geographische Position sowie einen unmittelbar vor dem Aufnehmen zurückgelegten Weg auf, um das Arbeitsgerät zu einem späteren Zeitpunkt durch erneutes Zurücklegen dieses Weges effizient wieder absetzen zu können. Diese Information ist im Rahmen der Verfahren nach DE 10 2017 201 040 A1 und DE 10 2011 120 884 B1 wertlos, denn solange die landwirtschaftliche Arbeitsmaschine das Arbeitsgerät nutzt, ist es am aufgezeichneten Ort gerade nicht zu finden.

Aufgabe der Erfindung ist, die Handhabung eines Geräts, das zeitweilig abgestellt worden ist, weiter zu rationalisieren.

Die Aufgabe wird einem Aspekt der Erfindung zufolge gelöst durch ein Verfahren zum Betreiben eines Gerätes mit den Schritten
a) Befördern des Geräts mit einer ersten landwirtschaftlichen Maschine,
b) Abkoppeln des Geräts von der ersten landwirtschaftlichen Maschine an einer Abstellposition,
c) Übertragen von geographischen Koordinaten der Abstellposition an ein Verwaltungssystem,
dadurch gekennzeichnet, dass der Schritt c) ferner das Übertragen einer geographischen Ausrichtung des Geräts an der Abstellposition an das Verwaltungssystem umfasst.

D.h. während gemäß der Lehre von EP 2 452 549 B1 der beim Heranfahren an das Anbaugerät zurückgelegte Weg aufgezeichnet wird, weil dessen Kenntnis das spätere Ablegen des Anbaugeräts an der gleichen Stelle erleichtert, nutzt die vorliegende Erfindung beim Abladen eines Geräts aufgezeichnete Informationen, und ermöglicht durch deren Weitergabe über die Verwaltungseinheit eine erleichterte Wiederaufnahme des Geräts nicht nur durch die landwirtschaftliche Maschine, die das Gerät ursprünglich abgesetzt hat, sondern auch durch eine beliebige andere.

Da das Gerät nicht immer auf dem Erdboden abgesetzt werden muss, d.h. auf der Fläche, auf der die landwirtschaftliche Maschine sich bewegt, kann es nützlich sein, wenn die landwirtschaftliche Maschine auch eine Information über eine Höhe über dem Erdboden, in der das Gerät an der Abstellposition, z. B. in einem Hochregal, abgesetzt worden ist, an das Verwaltungssystem überträgt.

Um die Wiederaufnahme des Geräts durch eine andere Maschine zu erleichtern, kann das Verfahren ferner einen Schritt
d) Weitergeben der geographischen Koordinaten und der Ausrichtung oder einer von der Ausrichtung abgeleiteten Information durch das Verwaltungssystem an eine zweite landwirtschaftliche Maschine umfassen.

Sofern eine Information über die Höhe des Geräts über dem Erdboden an das Verwaltungssystem übertragen worden ist, sollte es diese auch an die zweite landwirtschaftliche Maschine weitergeben.

Zum Ableiten der geographischen Ausrichtung des Geräts können geographische Koordinaten der ersten landwirtschaftlichen Maschine beim Abkoppeln und zu wenigstens einem Zeitpunkt kurz vor dem Abkoppeln herangezogen werden, in der Annahme, dass die aus diesen Koordinaten ableitbare Fahrtrichtung der Maschine auch die Orientierung des Geräts nach dem Abladen festlegt.

Die erste landwirtschaftliche Maschine weist herkömmlicherweise eine Kupplung für das Gerät auf. Vorzugsweise ist eine Kommunikationsschnittstelle der ersten landwirtschaftlichen Maschine mit der Kupplung verbunden, um bei einem Absenken der Kupplung, bei einem Verlust des elektrischen oder mechanischen Kontakts zum Gerät, bei einer Verringerung der auf die Kupplung wirkenden Traglast oder einem anderen einfach detektierbaren, typischerweise mit dem Abladen des Geräts verknüpften Ereignis die aktuellen geographischen Koordinaten und die geographische Ausrichtung an das Verwaltungssystem zu übertragen.

An der ersten landwirtschaftlichen Maschine kann eine Benutzerschnittstelle vorgesehen sein, an der ein Fahrer die Übertragung der aktuellen geographischen Koordinaten und der geographischen Ausrichtung an das Verwaltungssystem genehmigen oder willkürlich auslösen kann. Das Verweigern einer Genehmigung kann sinnvoll sein, wenn das Gerät nur kurze Zeit abgesetzt werden soll und in dieser Zeit kein Zugriff darauf durch eine andere landwirtschaftliche Maschine stattfinden soll.

Es kann vorkommen, dass ein Gerät zu Transportzwecken in anderer Weise mit einer landwirtschaftlichen Maschine verbunden wird als bei einem Arbeitseinsatz, oder dass ein Gerät sich aus mehreren Teilen zusammensetzt, von denen eines zum Transport und das andere für einen Arbeitseinsatz mit der Maschine verbunden wird. Ein solches zusammengesetztes Gerät kann beispielsweise ein Anbaugerät und einen Hänger umfassen, wobei das Anbaugerät auf dem Hänger von einer ersten Maschine zu einem geplanten Einsatzort befördert und am Einsatzort an eine zweite Maschine gekoppelt wird. In einem solchen Fall kann das Gerät eine erste Kupplung zum Zusammenwirken mit der ersten landwirtschaftlichen Maschine und eine von der ersten Kupplung verschiedene zweite Kupplung zum Zusammenwirken mit der zweiten landwirtschaftlichen Maschine aufweisen. Das Verfahren umfasst dann vorzugsweise ferner dem Schritt g) Ableiten einer zum Verbinden mit der zweiten Kupplung geeigneten Anfahrrichtung der zweiten landwirtschaftlichen Maschine anhand der geographischen Ausrichtung.

Dieser Schritt kann zweckmäßigerweise von dem Verwaltungssystem in Kenntnis der relativen Orientierung von erster und zweiter Kupplung am Gerät vorgenommen werden. Insbesondere kann die Verwaltungseinheit anhand des Typs der Maschine, an die sie die geographischen Koordinaten des Geräts weitergibt, entscheiden, welche Kupplung des Geräts für diese Maschine relevant ist, und die an die Maschine gemeldete Orientierung des Geräts dementsprechend wählen.

Die an die zweite Maschine übertragenen Daten können genutzt werden, um einem Fahrer der Maschine nicht nur die Position des Geräts, sondern auch eine geeignete Richtung für die Annäherung an das Gerät anzuzeigen. Vorzugsweise können die Daten der zweiten Maschine das Planen einer Route zum Anfahren des Geräts ermöglichen. Die Route kann dem Fahrer angezeigt werden, damit er die Maschine entlang der Route lenken kann; vorzugsweise ist die Maschine eingerichtet, um die Route autonom zu fahren.

Gegenstand der Erfindung ist ferner ein Verwaltungssystem zur Durchführung des oben beschriebenen Verfahrens, mit einer Kommunikationsschnittstelle für die Kommunikation mit der ersten und der zweiten landwirtschaftlichen Maschine und einem Rechner, der zu jedem in dem Verwaltungssystem angemeldeten Gerät einen Datensatz speichert, der zumindest in einem abgekoppelten Zustand jedes Geräts dessen aktuelle geographische Position und Ausrichtung enthält.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1-3: Schritte des erfindungsgemäßen Verfahrens gemäß einer ersten Ausgestaltung; und
- Fig. 4: einen Bildschirm einer landwirtschaftlichen Maschine vor dem Ankoppeln eines Geräts, und
- Fig. 5: eine Anwendungssituation einer zweiten Ausgestaltung des Verfahrens.

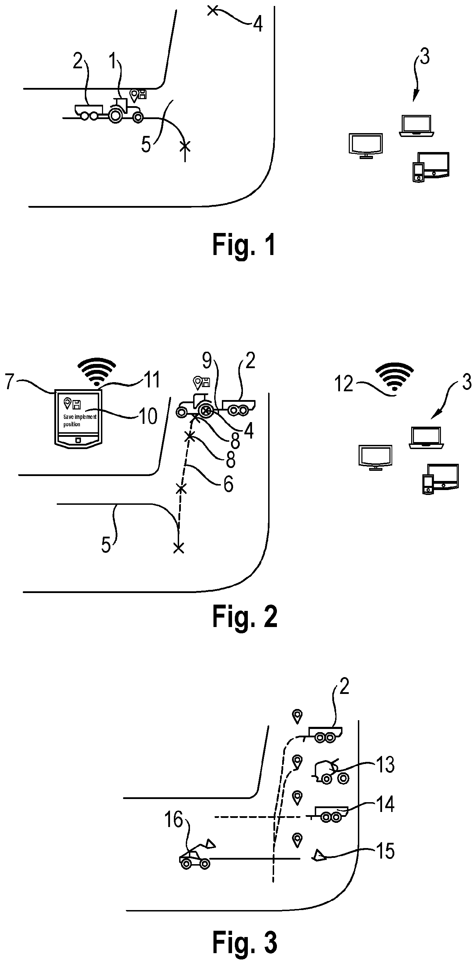

Fig. 1 zeigt schematisch eine erste landwirtschaftliche Maschine 1, die ein Gerät transportiert. Die Maschine 1 ist hier als Traktor dargestellt, es kann sich aber genauso gut um eine beliebige andere selbstfahrende Maschine handeln, an dem ein Gerät ankuppelbar ist, wie etwa einen Mähdrescher, einen Radlader, etc. An Bord der Maschine 1 befinden sich ein Bordcomputer, ein Empfänger für ein Navigationssignal, z.B. ein GPS-Signal sowie eine Funkschnittstelle für die drahtlose Kommunikation, z. B. über ein Mobilfunknetz, mit einem stationären Verwaltungssystem 3, z.B. einem Rechner in den Betriebsgebäuden eines Anwenders der Maschine 1. Das Gerät ist als Anhänger 2 dargestellt; Beispiele für andere Geräte werden noch erwähnt.

Um den Anhänger an einer Abstellposition 4 abzustellen, muss die Maschine 1 hier zunächst einen als durchgezogene Linie dargestellten Weg 5 im Vorwärtsgang und anschließend (s. Fig. 2) einen als gestrichelte Linie dargestellten Weg 6 im Rückwärtsgang zurücklegen. Während die Maschine 1 sich entlang der Wege 5, 6 bewegt, ermittelt der Bordcomputer (in Fig. 2 mit 7 bezeichnet) mit Hilfe des Navigationssignalempfängers wiederholt Positionen 8 der Maschine 1.

An der Abstellposition 4 angekommen, koppelt der Fahrer der Maschine 1 das Gerät ab. Wenn wie hier das Gerät ein Anhänger 2 ist, kann der Bordcomputer 7 mit einer Anhängerkupplung 9 der Maschine 1 verbunden sein, um aus der Aufhebung des mechanischen Kontakts an der Anhängerkupplung 9 oder an der Unterbrechung einer elektrischen Verbindung zum Anhänger 2 zu erkennen, dass dieser abgekoppelt wird. Im Falle eines Geräts, dessen Gewicht wenigstens zu einem großen Teil von der Maschine getragen wird, z.B. eines Vorsatzgeräts an einem Mähdrescher oder Feldhäcksler, oder falls es zum Abkoppeln des Geräts nötig war, dieses vom Boden abzuheben, etwa um es in einem Hochregal zu deponieren, kann die Abkopplung alternativ zu den genannten Möglichkeiten auch an der Entlastung eines die Höhe des Geräts an der Maschine steuernden Stellglieds erkannt werden.

Der Bordcomputer 7 erstellt auf die Feststellung hin, dass das Gerät abgekoppelt worden ist, eine Nachricht, die eine Kennung des Geräts, ggf. eine Angabe seines Typs, die geographischen Koordinaten des Ziels 4 sowie wenigstens einer der zuvor durchlaufenen Positionen 8 enthält. Die Nachricht kann auch eine Angabe über die Höhe, in der das Gerät abgesetzt worden ist, relativ zum Erdboden, auf dem sich die Maschine 1 bewegt, enthalten. Eine solche Angabe kann die spätere Wiederaufnahme des Geräts erleichtern, wenn dieses beispielsweise in einem Regal oder aufgrund von Unebenheiten des Erdbodens nicht exakt auf der Ebene, auf der sich Räder der Maschine 1 bewegen, abgesetzt worden ist.

Es kann vorgesehen sein, dass diese Nachricht unmittelbar und ohne Zutun des Fahrers der Maschine 1 an das Verwaltungssystem 3 übermittelt wird. Im hier betrachteten Fall zeigt der Bordcomputer 7 auf einem Bildschirm 10 eine Meldung an, die den Fahrer daran erinnert, die Übertragung der Meldung an das Verwaltungssystem 3 zu genehmigen, und sendet die Meldung nur nach erfolgter Genehmigung; alternativ könnte auch vorgesehen werden, dass der Bordcomputer 7 die Nachricht über seine Funkschnittstelle 11 sendet, wenn binnen einer vorgegeben Zeit nach Ausgabe einer diesbezüglichen Anfrage über den Bildschirm 10 der Fahrer dies nicht durch eine entsprechende Eingabe verbietet. So kann sichergestellt werden, dass das Verwaltungssystem 3 die Nachricht nur dann nicht erhält, wenn der Fahrer seiner Übertragung explizit widerspricht.

Das Verwaltungssystem 3 empfängt die Nachricht über seine Funkschnittstelle 12, identifiziert anhand der enthaltenen Kennung einen dem Gerät zugeordneten gespeicherten Datensatz und aktualisiert diesen, indem es die geographischen Koordinaten des Ziels 4 als aktuellen Standort des Geräts 2 einträgt. In der Nachricht ebenfalls enthaltene Koordinaten von Positionen 8 können in dem Datensatz unverändert abgespeichert oder vorher in eine Orientierungsangabe, z.B. die Angabe einer Himmelsrichtung, aus der die Maschine 1 das Ziel erreicht hat, umgerechnet werden. Aus dieser Himmelsrichtung sollte sich zu einem späteren Zeitpunkt die Maschine 1 oder eine andere Maschine dem Gerät wieder nähern, um es weiterzubefördern.

In dem Fall, dass wie hier das Gerät ein Anhänger 2 ist, besteht die Möglichkeit, dass die Maschine 1 ein Ziel im Vorwärtsgang anfährt, den Anhänger 2 abkoppelt und im Vorwärtsgang weiterfährt. In diesem Fall ist es für eine Wiederaufnahme des Anhängers 2 durch eine andere Maschine nicht sinnvoll, wenn sich diese aus derselben Richtung nähert, aus der die Maschine 1 das Ziel 4 erreicht hat. In diesem Fall verzögert sich die Aussendung der Nachricht, bis die Maschine 1 geographische Koordinaten einer oder mehrerer nach Verlassen des Ziels 4 durchlaufener Positionen gesammelt hat, und es werden diese anstelle der vor Erreichen des Ziels 4 durchlaufenen Positionen 8 an das Verwaltungssystem 3 gemeldet.

Fig. 3 zeigt einen Zustand mit mehreren abgestellten Geräten. Zu dem Anhänger 2 sind eine Ballenpresse 13, ein zweiter Anhänger 14 und eine Schaufel 15 eines Radladers 16 hinzugekommen. Wie an den Linien der zugehörigen Wege erkennbar, sind die Anhänger 2, 14 und die Ballenpresse 11 jeweils in Rückwärtsfahrt, die Schaufel 13 hingegen in Vorwärtsfahrt abgestellt worden. In den vom Verwaltungssystem 3 geführten Einträgen zu den verschiedenen Geräten sind jeweils die geographischen Koordinaten ihres aktuellen Standorts sowie von zum Erreichen dieses Standorts zu durchlaufenden Punkten vermerkt.

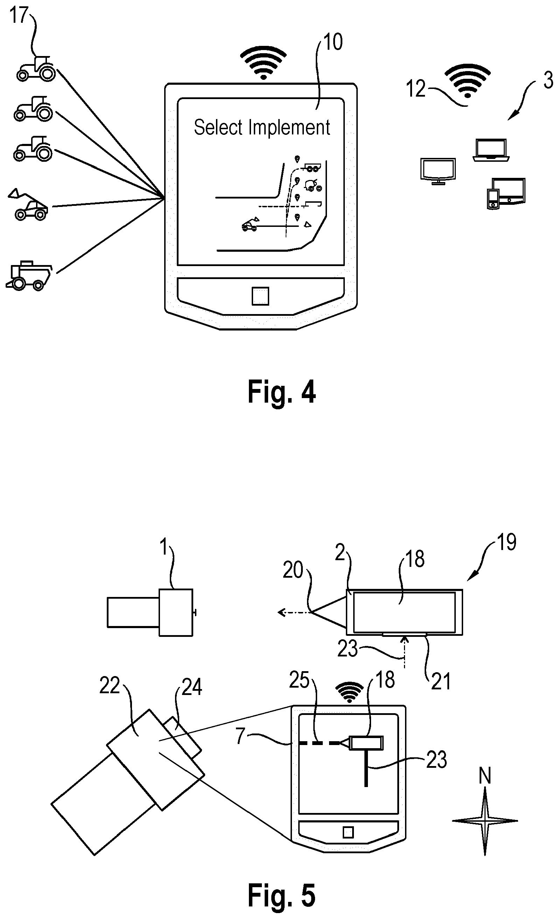

Eine landwirtschaftliche Maschine 17, die ein bestimmtes Gerät zur Durchführung einer Aufgabe benötigt, nimmt über ihre Funkschnittstelle 11 Kontakt zum Verwaltungssystem 3 auf und empfängt von diesem Angaben zu Art und Standort der verfügbaren Geräte, hier, wie in Fig. 4 dargestellt, in Form einer auf dem Bildschirm 10 des Bordcomputers anzuzeigenden Karte. Die Karte zeigt am Standort des Geräts jeweils ein Symbol, das den Typ des Geräts anzeigt, sowie einen Weg, auf dem die Maschine sich bewegt hat, die das Gerät an diesen Standort gebracht hat, abgeleitet aus den von dieser Maschine übertragenen Positionen 8, und auf dem folglich auch die Maschine 17 diesen Standort müsste erreichen können. Ein Fahrer kann die angezeigte Karte nutzen, um die Maschine 17 auf diesen Weg einzuspuren und so das gewünschte Gerät anzufahren, alternativ kann vorgesehen sein, dass er lediglich das gewünschte Gerät, z.B. durch Antippen des Symbols auf dem Bildschirm 10, auswählt und der Bordcomputer 7 daraufhin die Maschine 17 autonom entlang des Weges zum Standort lenkt. So ist sichergestellt, dass die Maschine 17 das Gerät in einer zum Verbinden des Geräts mit der Maschine 17 geeigneten Orientierung anfährt.

Ein Sonderfall ergibt sich in der bereits in EP 2 452 549 B1 betrachteten Situation, dass ein Anhänger mit einem Vorsatzgerät an einen Einsatzort gefahren wird und dort das Vorsatzgerät an eine Maschine gekoppelt werden soll. In einem solchen Fall weist wie in Fig. 5 gezeigt das aus Anhänger 2 und Vorsatzgerät 18 kombinierte Gerät 19 zwei Kupplungen auf, zum einem eine Anhängerkupplung 20 zum Zusammenwirken der Maschine 1, die das Gerät 19 wie oben beschrieben zu einem Standort befördert, und eine Kupplung 21 zum Anschließen an eine Erntemaschine 22. Im in Fig. 5 gezeigten Zustand hat die Maschine 1 das Gerät 19 z.B. nach Rückwärtsfahrt nach Westen und folglich mit nach Osten weisender Anhängerkupplung 20 abgestellt. Die Orientierung des Vorsatzgeräts 18 auf dem Anhänger 2 ist bauartbedingt vorgegeben; im vorliegenden Fall ist die Kupplung 21 gegen die Anhängerkupplung 20 um 90° im Gegenuhrzeigersinn gedreht.

Aus der Nachricht, die die Maschine 1 nach dem Abkuppeln des Geräts 19 an das Verwaltungssystem 3 geschickt hat, kennt dieses die geographischen Koordinaten des Standorts des Geräts 19 und von einer oder mehreren Positionen, die die Maschine 1 kurz vor oder nach dem Abkuppeln durchlaufen hat. Anhand der Kennung des Geräts ist das Verwaltungssystem 3 in der Lage, zu erkennen, dass das Gerät 19 das Vorsatzgerät 18 umfasst, und einen Weg 23 zu berechnen, auf dem das Vorsatzgerät 18 so angefahren werden kann, dass eine Kupplung 24 der Erntemaschine 22 exakt auf die Kupplung 21 des Vorsatzgeräts 18 trifft.

Wenn die Erntemaschine 22 Kontakt mit dem Verwaltungssystem 3 aufnimmt, um Standorte von Geräten zu erfahren, kann das Verwaltungssystem 3 den Standort des Geräts 19 und sowohl den von der Maschine 1 gefahrenen Weg 25 zur Anhängerkupplung 20 als auch den daraus berechneten Weg 23 zur Kupplung 22 des Vorsatzgeräts 18 übermitteln, woraufhin der Bordcomputer 7 der Erntemaschine 22 die in Fig. 5 skizzierte Karte anzeigt. Denkbar ist auch, dass das Verwaltungssystem 3 anhand einer Kennung der Erntemaschine 22, die diese bei der Kontaktaufnahme übermittelt, erkennt, dass die Erntemaschine 22 keine zum Ziehen des Anhängers 2 geeignete Kupplung besitzt, und deshalb nur den Weg 23 an deren Bordcomputer 7 übermittelt.

### Bezugszeichen

- 1: landwirtschaftliche Maschine
- 2: Gerät
- 3: Verwaltungssystem
- 4: Abstellposition
- 5: Weg
- 6: Weg
- 7: Bordcomputer
- 8: Position
- 9: Anhängerkupplung
- 10: Bildschirm
- 11: Funkschnittstelle
- 12: Funkschnittstelle
- 13: Ballenpresse
- 14: Anhänger
- 15: Schaufel
- 16: Radlader
- 17: landwirtschaftliche Maschine
- 18: Vorsatzgerät
- 19: Gerät
- 20: Anhängerkupplung
- 21: Kupplung
- 22: Erntemaschine
- 23: Weg
- 24: Kupplung
- 25: Weg

## Patentansprüche

1. Verfahren zum Betreiben eines Gerätes mit den Schritten
a) Befördern des Geräts (2, 19) mit einer ersten landwirtschaftlichen Maschine (1),
b) Abkoppeln des Geräts (2, 19) von der ersten landwirtschaftlichen Maschine (1) an einer Abstellposition (4),
c) Übertragen von geographischen Koordinaten der Abstellposition (4) an ein Verwaltungssystem (3),
**dadurch gekennzeichnet, dass** der Schritt c) ferner das Übertragen einer geographischen Ausrichtung des Geräts (2, 19) an der Abstellposition (4) an das Verwaltungssystem (3) umfasst.

2. Verfahren nach Anspruch 1, bei dem Schritt c) ferner das Übertragen einer Höhe über dem Erdboden des Geräts (2, 19) an der Abstellposition (4) an das Verwaltungssystem (3) umfasst.

3. Verfahren nach Anspruch 1 oder 2, ferner mit dem Schritt d) Weitergeben der geographischen Koordinaten und der Ausrichtung oder einer von der Ausrichtung abgeleiteten Information durch das Verwaltungssystem (3) an eine zweite landwirtschaftliche Maschine (17, 22).

4. Verfahren nach Anspruch 2 und Anspruch 3, bei dem in Schritt d) die Höhe über dem Erdboden des Geräts (2, 19) an die zweite landwirtschaftliche Maschine (17, 22) weitergegeben wird.

5. Verfahren nach einem der vorhergehenden Ansprüche, ferner mit dem Schritt
e) Ableiten der geographischen Ausrichtung des Geräts (2, 18, 19) von geographischen Koordinaten der ersten landwirtschaftlichen Maschine (1) beim Abkoppeln und an wenigstens einer kurz vor oder nach Erreichen der Abstellposition (4) durchlaufenen Position (8).

6. Verfahren nach einem der vorhergehenden Ansprüche, bei dem die erste landwirtschaftliche Maschine (1) eine Kupplung (9) für das Gerät (2, 19) aufweist und eine Kommunikationsschnittstelle (11) der ersten landwirtschaftlichen Maschine (1) mit der Kupplung (9) verbunden ist, um bei einem Absenken der Kupplung, bei einem Verlust des elektrischen oder mechanischen Kontakts zum Gerät (2, 19) oder bei einer Verringerung der auf die Kupplung wirkenden Traglast die aktuellen geographischen Koordinaten und die geographische Ausrichtung zu übertragen.

7. Verfahren nach einem der vorhergehenden Ansprüche, ferner mit dem Schritt
f) Genehmigen oder Auslösen einer Übertragung der geographischen Koordinaten und der geographische Ausrichtung an das Verwaltungssystem (3) an einer Benutzerschnittstelle (10) der ersten landwirtschaftlichen Maschine (1).

8. Verfahren nach einem der vorhergehenden Ansprüche, bei dem das Gerät (19) eine erste Kupplung (20) zum Zusammenwirken mit der ersten landwirtschaftlichen Maschine (1) und eine von der ersten Kupplung (20) verschiedene zweite Kupplung (21) zum Zusammenwirken mit der zweiten landwirtschaftlichen Maschine (22) aufweist, ferner mit dem Schritt g) Ableiten einer zum Verbinden mit der zweiten Kupplung (21) geeigneten Anfahrrichtung der zweiten landwirtschaftlichen Maschine (22) anhand der geographischen Ausrichtung.

9. Verfahren nach einem der vorhergehenden Ansprüche, ferner mit dem Schritt
h) Planen einer Route zum Anfahren des Geräts durch die zweite landwirtschaftliche Maschine (17, 22) anhand der geographischen Koordinaten und der geographischen Ausrichtung.

10. Verwaltungssystem zur Durchführung des Verfahrens nach einem der vorhergehenden Ansprüche, mit einer Kommunikationsschnittstelle (12) für die Kommunikation mit der ersten und optional der zweiten landwirtschaftlichen Maschine (1; 17, 22) und einem Rechner, der zu jedem in dem Verwaltungssystem (3) angemeldeten Gerät (2, 18, 19) einen Datensatz speichert, der die zumindest in einem abgekoppelten Zustand jedes Anbaugeräts (2, 18, 19) dessen aktuelle geographische Position und Ausrichtung enthält.
